# EUROPÄISCHE PATENTSCHRIFT

(11) **EP 0 650 683 B1**
(45) Veröffentlichungstag und Bekanntmachung des Hinweises auf die Patenterteilung: **27.11.1996**
(21) Anmeldenummer: 94114341.4
(22) Anmeldetag: 13.09.1994
(51) Int. Cl.: A47J 36/06

(54) **Kochtopfdeckel mit Griffbügeln**
Lid for a cooking vessel with grip brackets
Couvercle pour un récipient de cuisson avec des étriers servant de poignées

(30) Priorität: 02.11.1993 DE 9316720 U
(43) Veröffentlichungstag der Anmeldung: 03.05.1995
(73) Patentinhaber: SILIT-WERKE GMBH & CO. KG, D-88499 Riedlingen (DE)
(72) Erfinder: Fingerle, Hans, D-88499 Riedlingen (DE); Weigand, Horst, D-88521 Ertingen (DE)
(74) Vertreter: Goddar, Heinz J., Dr.

(56) Entgegenhaltungen:
- EP-A- 0 275 547
- CH-A- 252 326
- DE-U- 8 911 192
- DE-U- 9 205 199
- FR-A- 1 262 066
- US-A- 2 907 467

## Beschreibung

Die Erfindung betrifft einen Deckel für einen Kochtopf, mit einem als Zone eines zu dem Topf hin weisenden Sphäroidabschnitts ausgebildeten Deckelring, dessen mittlerer Durchmesser etwa dem Innendurchmesser des Topfes entspricht, einer mit dem Deckelring verbundenen Deckelfläche in Form eines Sphäroidabschnitts und einem Deckelgriff, der zwei einander gegenüberliegend auf der dem Topf abgewandten Seite des Deckelrings auf diesen aufgesetzte Griffstücke und zwei diese miteinander verbindende, sich mit gegenseitigem Abstand parallel zueinander über die Deckelfläche hinweg erstreckende, zu der dem Topf abgewandten Seite gekrümmte Griffbügel aufweist.

Aus der DE-GM 92 05 199 ist ein Kochtopfdeckel der vorstehend beschriebenen Art bekannt, bei dem der Deckelring als Zone eines gedachten, zu dem Topf hin weisenden Kugelabschnitts ausgebildet ist und die Deckelfläche die Form eines von dem Topf weg weisenden Kugelabschnitts hat, wobei also die Krümmung des Deckelrings konvex zum Topf hin und die Krümmung der Deckelfläche konvex vom Topf weg gerichtet sind. Dadurch, daß der Deckelring die Form eines Kugelabschnitts hat, sitzt dieser linienförmig oder flächig auf dem Topfrand auf, wenn der Deckel gerade auf den Topf aufgesetzt ist, wobei sich aber bei einem Verschieben und gleichzeitigem Verkippen zur Seite an dem einen Topfrand eine sichelförmige Ausgießöffnung bildet. Die kugelzonenförmig konvexe Ausbildung des Deckelrings bewirkt dessen linienförmiges oder flächiges Aufliegen auf dem Topfrand in dem der sichelförmigen Ausgießöffnung gegenüberliegenden Bereich, wodurch einerseits ein Abgießen von Flüssigkeit auf einfache Weise gewährleistet ist, zum anderen aber ein Austreten von Dampf und damit die Gefahr eines Verbrühens vermieden wird.

Der vorstehend beschriebene Kochtopfdeckel hat sich durchaus bewährt, allerdings hat es sich als wünschenswert herausgestellt, auch bei einem sehr starken, möglicherweise unbeabsichtigten Verkippen des Kochtopfdeckels noch eine zuverlässige Abdichtung gegen das Austreten von Dampf an der der sichelförmigen Ausgießsöffnung gegenüberliegenden Seite des Topfes zu gewährleisten.

Der Erfindung liegt daher die Aufgabe zugrunde, den bekannten Kochtopfdeckel dahingehend weiterzubilden, daß auch bei sehr starkem Verkippen noch eine zuverlässige Dampfabdichtung an der der durch das Verkippen gebildeten Ausgießöffnung gegenüberliegenden Topfrandseite gewährleistet ist, wobei gleichzeitig die Herstellung des Deckels vereinfacht und die Reinigungsmöglichkeiten verbessert werden sollen.

Erfindungsgemäß wird diese Aufgabe dadurch gelöst, daß der Deckelring und die Deckelfläche einstückige Bestandteile einer konvex zu dem Topf hin gekrümmten Sphäroidkalotte mit einheitlichem Krümmungsradius sind.

Dabei kann vorgesehen sein, daß die Sphäroidkalotte einen einheitlichen Krümmungsradius hat.

Die Erfindung schlägt auch vor, daß die Sphäroidkalotte eine Kugelkalotte ist.

Nach der Erfindung kann auch vorgesehen sein, daß die Sphäroidkalotte eine Ganzglaskalotte ist.

Der erfindungsgemäße Deckel kann auch so ausgebildet sein, daß die Griffbügel aus Metall bestehen.

Die Erfindung schlägt auch vor, daß die Griffbügel jeweils kreisrunden Querschnitt haben.

Weiterhin sieht die Erfindung vor, daß die Griffstücke aus Kunststoff bestehen.

Nach der Erfindung kann auch vorgesehen sein, daß die Griffstücke mit der Sphäroidkalotte mittels jeweils eines die Sphäroidkalotte nahe deren Umfangsrand durchsetzenden Verbindungsbolzens verbunden sind.

Dabei ist eine besondere Ausführungsform gekennzeichnet durch einen derartigen Abstand der Verbindungsbolzen vom Umfangsrand der Sphäroidkalotte, daß der die Sphäroidkalotte durchsetzende Teil der Verbindungsbolzen bei auf den Topf aufgesetztem Deckel innerhalb des Innendurchmessers des oberen Topfrandes liegt.

Alternativ ist eine Ausführungsform der Erfindung gekennzeichnet durch einen derartigen Abstand der Verbindungsbolzen vom Umfangsrand der Sphäroidkalotte, daß der die Sphäroidkalotte durchsetzende Teil der Verbindungsbolzen bei auf den Topf aufgesetztem Deckel außerhalb des Innendurchmessers des oberen Topfrandes liegt.

Unter "Sphäroidabschnitten" bzw. "Sphäroidkalotten" werden solche räumlichen Gebilde verstanden, wie sie, ähnlich einem Kugelabschnitt, auch unter Zugrundelegung beispielsweise eines Ellipsoids oder dergleichen gebildet werden, wobei grundsätzlich auch Kalotten mit nicht einheitlichen Krümmungsradius mitverstanden sind, es für die Erfindung jedoch charakteristisch ist, daß anders als beim gattungsbildenden Stand der Technik die Krümmung ihrem Sinn nach einseitig gerichtet ist, also, bezogen auf den Topf, kein Wechsel von konvex zu konkav bzw. umgekehrt stattfindet. Auch sei angemerkt, daß die Sphäroidkalotte nicht nur aus Glas bestehen kann, obwohl dies bevorzugt ist, sondern daß auch andere Werkstoffe, wie z.B. Metall, Kunststoff, Keramik und dergleichen, innerhalb des Erfindunsgedankens miterfast sind.

Der Erfindung liegt die überraschende Erkenntnis zugrunde, daß es gelingt, den an sich bewährten, bekannten Kochtopfdeckel der gattungsgemäßen Art noch weiter zu verbessern, indem der Deckelring und die Deckelfläche nicht, wie bei dem bekannten Kochtopfdeckel, als Kugelabschnitte mit einander entgegengesetzten Krümmungen ausgebildet werden, sondern Deckelring und Deckelfläche zu einer Sphäroidkalotte mit nicht wechselnder Krümmung, vorzugsweise mit durchgehendem Krümmungsradius, vereinigt werden, deren Unterfläche glatt auf dem oberen Topfrand aufsitzt. Selbst dann, wenn ein starkes Verkippen des Kochtopfdeckels gegenüber dem Topf erfolgt, bleibt der der gebildeten Ausgießöffnung gegenüberliegende Topfrand zuverlässig gegen Dampfaustritt abgedichtet, weil der Deckelring durch die einstückige Ausbildung mit der Deckelfläche in Form der Sphäroidkalotte, vorzugsweise Kugelkalotte, sozusagen unendlich breit ist und sich wegen fehlender Anderung des Krümmungssinnes auch bei einem starken Verschieben des Kochtopfdeckels auf dem Topfrand keine Unterbrechung der Dichtwirkung ergibt.

Die glatte Form der durchgehenden Sphäroidkalotte gewährleistet eine einfache Reinigungsmöglichkeit, ferner ist die Herstellung auch besonders wenig aufwendig, da nicht mehr, wie beim bekannten Kochtopfdeckel der gattungsgemäßen Art, Deckelring und Deckelfläche als getrennte Bauteile ausgebildet sind, die miteinander verbunden werden müßten. Schließlich bietet diejenige Ausführungsform der Erfindung, bei der die die Griffstücke mit der Sphäroidkalotte verbindenden Verbindungsbolzen die Sphäroidkalotte durchsetzen und einen derartigen Abstand vom Umfangsrand der Sphäroidkalotte haben, daß ihre durchsetzenden Abschnitte bei auf den Topf aufgesetzten Deckel innerhalb des Innendurchmessers des oberen Topfrandes liegen, noch eine Sicherung des Deckels gegen unbeabsichtigtes Verschieben auf dem Topfrand. Dabei ist gleichsam auch ein geführtes Verkippen des Kochtopfdeckels möglich, weil ja beim Verkippen des Kochtopfdeckels, zwecks Herstellens einer Aus- oder Abgießöffnung, die Verbindungsbolzen mit ihrem die Sphäroidkalotte durchsetzenden Teil innerhalb des oberen Topfrandes an dessen Innenwandung zur Anlage kommen und so gleichsam eine Schwenkachse erzeugen.

Weitere Merkmale und Vorteile der Erfindung ergeben sich aus der nachstehenden Beschreibung, in der ein Ausführungsbeispiel anhand der schematischen Zeichnung im einzelnen erläutert ist. Dabei zeigt:
- Fig. 1: ein Ausführungsbeispiel eines Kochtopfdeckels nach der Erfindung in der Draufsicht; und
- Fig. 2: einen Schnitt entlang der Linie II - II von Figur 1.

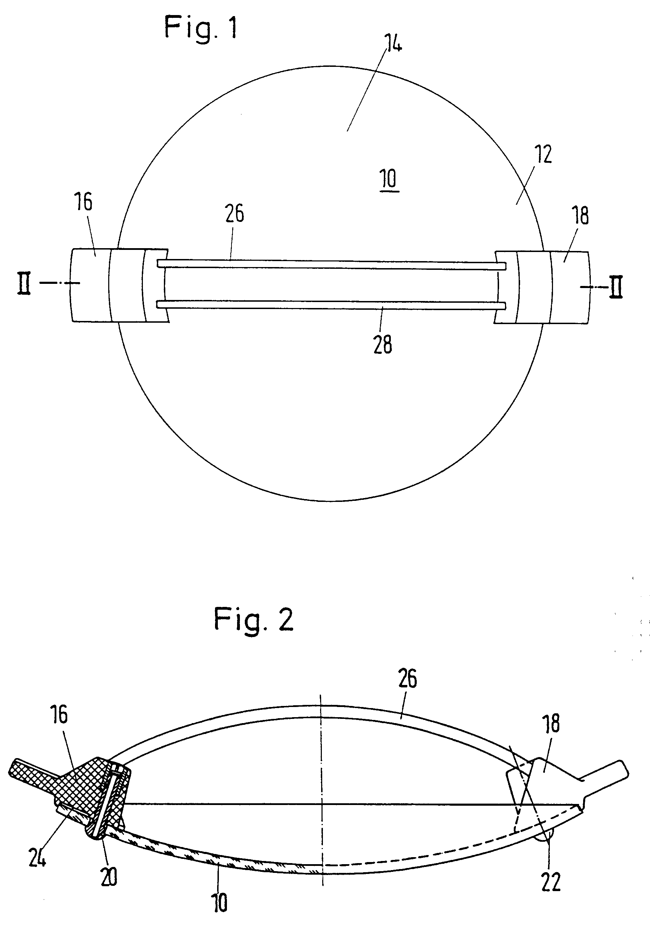

Wie die Zeichnung erkennen läßt, weist der Kochtopfdeckel nach der Erfindung bei dem dort gezeigten Ausführungsbeispiel eine Ganzglas-Kugelkalotte 10 mit einheitlichem Krümmungsradius auf, deren nahe dem Umfangsrand gelegener Teilkugelabschnitt mit einer Breite von einigen wenigen Zentimetern als Deckelring 12 und deren innerhalb des Deckelringes 12 liegender zentraler Teil als Deckelfläche 14 wirkt, wobei der Deckelring 12 und die Deckelfläche 14 einstückig und übergangslos Bestandteile der Kugelkalotte 10 sind, welche im Aufsetzzustand, wie Figur 2 erkennen läßt, in Richtung auf den unterhalb des Kochtopfdeckels in der Position von Figur 2 zu denkenden Topfes konvex, also sich auf den Topf hin krümmend, ausgebildet ist.

Diametral einander gegenüberliegend sind auf den Deckelring 12 zwei Griffstücke 16, 18 aus Kunststoff aufgesetzt, welche mit der Kugelkalotte 10 mittels jeweils eines Verbindungsbolzens 20, 22 verbunden sind, welcher die Kugelkalotte 10 durchsetzt. Der Abstand der Verbindungsbolzen 20, 22 vom Umfangrand der Kugelkalotte 10 ist bei dem gezeigten Ausführungsbeispiel dabei so gewählt, daß der die Kugekalotte 10 von der Oberseite (Figur 2) her durchsetzende Teil der Verbindungsbolzen 20, 22 bei auf den Topf aufgesetztem Kochdeckel innerhalb des Innendurchmessers des Topfes an dessen oberem Umfangsrand liegt. Figur 2 läßt weiterhin erkennen, daß die Griffstücke 16, 18 zusätzlich zu den Verbindungsbolzen 20, 22 mit der Kugelkalotte 10 auch noch durch eine Klebeverbindung 24 verbunden sind.

In den Griffstücken 16, 18 sind zwei Griffbügel 26, 28, aus Metall bestehend und jeweils kreisrunden Querschnitt aufweisend, verankert, welche, wie insbesondere Figur 2 erkennen läßt, zu der Krümmung der Kugelkalotte 10 entgegengesetzt konvex nach oben (Figur 2) gekrümmt sind, wodurch gewährleistet ist, daß die Griffbügel 26, 28, die zueinander parallel verlaufen, von einem Benutzer mit der Hand untergriffen werden können, ohne daß die Gefahr eines Kontaktes mit der möglicherweise heißen Oberfläche der Kugelkalotte 10 besteht.

### BEZUGSZEICHENLISTE

- 10: Kugelkalotte
- 12: Deckelring
- 14: Deckelfläche
- 16: Griffstück
- 18: Griffstück
- 20: Verbindungsbolzen
- 22: Verbindungsbolzen
- 24: Klebeverbindung
- 26: Griffbügel
- 28: Griffbügel

## Patentansprüche

1. Deckel für einen Kochtopf, mit einem als Zone eines zu dem Topf hin weisenden Sphäroidabschnitts ausgebildeten Deckelring (12), dessen mittlerer Durchmesser etwa dem Innendurchmesser des Topfes entspricht, einer mit dem Deckelring verbundenen Deckelfläche (14) in Form eines Sphäroidabschnitts und einem Deckelgriff, der zwei einander gegenüberliegend auf der dem Topf abgewandten Seite des Deckelrings auf diesen aufgesetzte Griffstücke (16, 18) und zwei diese miteinander verbindende, sich mit gegenseitigem Abstand parallel zueinander über die Deckelfläche hinweg erstreckende, zu der dem Topf abgewandten Seite gekrümmte Griffbügel (26, 28) aufweist, dadurch gekennzeichnet, daß der Deckelring (12) und die Deckelfläche (14) einstückige Bestandteile einer konvex zu dem Topf hin gekrümmten Sphäroidkalotte (10) mit einheitlichem Krümmungsradius sind.

2. Deckel nach Anspruch 1, dadurch gekennzeichnet, daß die Sphäroidkalotte einen einheitlichen Krümmungsradius hat.

3. Deckel nach Anspruch 2, dadurch gekennzeichnet, daß die Sphäroidkalotte eine Kugelkalotte (10) ist.

4. Deckel nach einem der vorangehenden Ansprüche, dadurch gekennzeichnet, daß die Sphäroidkalotte (10) eine Ganzglaskalotte ist.

5. Deckel nach Anspruch 1, dadurch gekennzeichnet, daß die Griffbügel (26, 28) aus Metall bestehen.

6. Deckel nach einem der vorangehenden Ansprüche, dadurch gekennzeichnet, daß die Griffbügel (26, 28) jeweils kreisrunden Querschnitt haben.

7. Deckel nach einem der vorangehenden Ansprüche, dadurch gekennzeichnet, daß die Griffstücke (16, 18) aus Kunststoff bestehen.

8. Deckel nach einem der vorangehenden Ansprüche, dadurch gekennzeichnet, daß die Griffstücke (16, 18) mit der Sphäroidkalotte (10) mittels jeweils eines die Sphäroidkalotte (10) nahe deren Umfangsrand durchsetzenden Verbindungsbolzens (20, 22) verbunden sind.

9. Deckel nach Anspruch 8, gekennzeichnet durch einen derartigen Abstand der Verbindungsbolzen (20, 22) vom Umfangsrand der Sphäroidkalotte (10), daß der die Sphäroidkalotte (10) durchsetzende Teil der Verbindungsbolzen (20, 22) bei auf den Topf aufgesetztem Deckel innerhalb des Innendurchmessers des oberen Topfrandes liegt.

10. Deckel nach Anspruch 8, gekennzeichnet durch einen derartigen Abstand der Verbindungsbolzen (20, 22) vom Umfangsrand der Sphäroidkalotte (10), daß der die Sphäroidkalotte (10) durchsetzende Teil der Verbindungsbolzen (20, 22) bei auf den Topf aufgesetztem Deckel außerhalb des Innendurchmessers des oberen Topfrandes liegt.

## Claims

1. A lid for a cooking-pot comprising a ring (12) in the form of a zone of a spheroidal portion pointing towards the pot and having an average diameter approximately equal to the inner diameter of the pot, a lid surface (14) connected to the ring and in the form of a spheroidal portion and a lid handle comprising two parts (16, 18) mounted on the ring on the side remote from the pot and two curved handles (26, 28) which connect the handle parts, extend parallel to and at a distance from one another over the lid surface and are curved towards the side remote from the pot, characterised in that the ring (12) and the surface (14) are one-piece components of a spheroidal cap (10) having a uniform radius of curvature and a convex curvature towards the pot.

2. A lid according to claim 1, characterised in that the spheroidal cap has a uniform radius of curvature.

3. A lid according to claim 2, characterised in that the spheroidal cap is a spherical cap (10).

4. A lid according to any of the preceding claims, characterised in that the spheroidal cap (10) is an all-glass cap.

5. A lid according to claim 1, characterised in that the curved handles (26, 28) are of metal.

6. A lid according to any of the preceding claims, characterised in that the curved handles (26, 28) each have a circular cross-section.

7. A lid according to any of the preceding claims, characterised in that the handle parts (16, 18) are of plastic.

8. A lid according to any of the preceding claims, characterised in that the handle parts (16, 18) are connected to the spheroidal cap (10) by bolts (20, 22) which each extend through the cap (10) near its peripheral edge.

9. A lid according to claim 8, characterised in that the distance between the bolts (20, 22) and the peripheral edge of the spheroidal cap (10) is such that, when the lid is fitted on the pot, the part of the bolts (20, 22) extending through the cap (10) lies inside the inner diameter of the upper edge of the pot.

10. A lid according to claim 8, characterised in that the distance between the bolts (20, 22) and the peripheral edge of the spheroidal cap (10) is such that, when the lid is fitted on the pot, the part of the bolts (20, 22) extending through the cap (10) lies outside the inner diameter of the upper edge of the pot.

## Revendications

1. Couvercle pour un récipient de cuisson, comprenant un anneau de couvercle (12), qui est formé comme une zone d'une section sphéroïdale orientée vers le récipient et dont le diamètre moyen correspond à peu près au diamètre intérieur du récipient, une surface de couvercle (14), qui est liée à l'anneau de couvercle et qui a la forme d'une section sphéroïdale, et une poignée de couvercle qui comporte deux manettes (16, 18), placées sur l'anneau de couvercle, diamétralement opposées l'une à l'autre, sur la face de l'anneau de couvercle qui est opposée au récipient, et deux étriers servant de poignées (26, 28), qui relient les manettes l'une à l'autre, qui s'étendent parallèles, avec un certain écartement, au-dessus de la surface de couvercle, et qui sont courbés vers la face opposée au récipient, caractérisé en ce que l'anneau de couvercle (12) et la surface de couvercle (14) sont des parties constituantes, en une pièce, d'une calotte sphéroïdale (10) qui est courbée convexe vers le récipient et qui a un rayon de courbure uniforme.

2. Couvercle selon la revendication 1, caractérisé en ce que la calotte sphéroïdale a un rayon de courbure uniforme.

3. Couvercle selon la revendication 2, caractérisé en ce que la calotte sphéroïdale est une calotte sphérique (10).

4. Couvercle selon l'une des revendications précédentes, caractérisé en ce que la calotte sphéroïdale (10) est une calotte entièrement en verre.

5. Couvercle selon la revendication 1, caractérisé en ce que les étriers servant de poignées (26, 28) sont en métal.

6. Couvercle selon l'une des revendications précédentes, caractérisé en ce que les étriers servant de poignées (26, 28) ont chacun une section circulaire.

7. Couvercle selon l'une des revendications précédentes, caractérisé en ce que les manettes (16, 18) sont en plastique.

8. Couvercle selon l'une des revendications précédentes, caractérisé en ce que les manettes (16, 18) sont liées à la calotte sphéroïdale (10) chacune au moyen d'un axe de fixation (20, 22) traversant la calotte sphéroïdale (10) près de son bord circonférentiel.

9. Couvercle selon la revendication 8, caractérisé par une telle distance entre les axes de fixation (20, 22) et le bord circonférentiel de la calotte sphéroïdale (10) que la partie, traversant la calotte sphéroïdale (10), des axes de fixation (20, 22) se trouve, lorsque le couvercle est posé sur le récipient, à l'intérieur du diamètre intérieur du bord supérieur du récipient.

10. Couvercle selon la revendication 8, caractérisé par une telle distance entre les axes de fixation (20, 22) et le bord circonférentiel de la calotte sphéroïdale (10) que la partie, traversant la calotte sphéroïdale (10), des axes de fixation (20, 22) se trouve, lorsque le couvercle est Posé sur le récipient, à l'extérieur du diamètre intérieur du bord supérieur du récipient.
